# EUROPÄISCHE PATENTSCHRIFT

(11) **EP 1 627 207 B1**
(45) Veröffentlichungstag und Bekanntmachung des Hinweises auf die Patenterteilung: **02.09.2015**
(21) Anmeldenummer: 04731871.2
(22) Anmeldetag: 10.05.2004
(51) Int. Cl.: G01D 5/245, G01D 5/347, G01D 5/249

(54) **SENSOR ZUR MESSUNG EINER LÄNGE ODER EINES WINKELS**
SENSOR FOR MEASURING A LENGTH OR AN ANGLE
CAPTEUR DE MESURE D'UNE LONGUEUR OU D'UN ANGLE

(30) Priorität: 17.05.2003 CH 874032003
(43) Veröffentlichungstag der Anmeldung: 22.02.2006
(73) Patentinhaber: ThyssenKrupp Presta Aktiengesellschaft, 9492 Eschen (LI)
(72) Erfinder: STAUDENMANN, Christian, CH-9470 Buchs SG (CH); BRUNNSCHWEILER, Daniel, CH-7306 Fläsch (CH)
(74) Vertreter: Lenzing Gerber Stute
(86) Internationale Anmeldenummer: PCT/CH2004/000281
(87) Internationale Veröffentlichungsnummer: WO 2004/102123

(56) Entgegenhaltungen:
- WO-A-02/084223
- DE-A- 4 436 784
- US-A- 5 539 993
- US-B1- 6 389 342

## Beschreibung

Die Erfindung bezieht sich auf eine elektrische Servolenkvorrichtung für Kraftfahrzeuge mit einer Drehwinkelsensoranordnung nach Oberbegriff des Anspruch 1 sowie auf ein Verfahren gemäss Anspruch 14.
Die Erfindung befasst sich mit einer Lenkvorrichtung für Kraftfahrzeuge mit Hilfskraftantrieb, bei der über einen Drehwinkelsensor eine gewünschte Lenkbewegung detektiert wird, über Regeleinrichtungen eine Soll-Ist-Abweichung bestimmt wird, daraus ein erforderliches Verstellmoment berechnet wird und dem Hilfskraftantrieb die entsprechende Leistung zugeführt wird.

Im Stand der Technik sind verschiedene Lenkvorrichtungen dieser Art bekannt. Insbesondere gibt es in neuerer Zeit vermehrt Lenkvorrichtungen mit elektrischem Hilfskraftantrieb (DE10141199A1) oder, unter Umgehung der mechanischen Kopplung zwischen Lenkrad und Rädern, mit direktem elektrischen Antrieb der Lenkverstellung der Räder.

Im Stand der Technik werden zur Winkelmessung häufig Hallsensoren verwendet. Dabei sind auf das drehbare Teil magnetische Elemente befestigt, deren Polarität in einem festen Zeitraster wechselt. Eine Hallsonde nimmt entsprechend die durch die Wechsel des Magnetfelds verursachte Hallspannung auf und gibt Zählimpulse aus. Durch Auszählen der Zählimpulse kann der Differenzwinkel bestimmt werden. Nur durch die Markierung eines Startpunktes, beispielsweise durch mehrere Impulse mit einer gleichen Polarität oder durch eine zusätzliche Sensoranordnung markiert, kann der absolute Drehwinkel bestimmt werden. In alternativen Ausführungsformen, wie beispielsweise in der DE 101 04 855 Al vorgestellt, wird als zusätzliche Information, die Abfolge der Zählimpulse verwendet. Allerdings sind hier drei Sensoren erforderlich.

Die Auszählung von Zählimpulsen bietet gegenüber der Verwendung analoger Signale den Vorteil, dass der Signal-Rausch-Abstand wesentlich vergrössert wird, das heisst dass Störeinflüsse die Qualität der Signalauswertung weniger Beeinflussen.

In der US 6,389,342 B1 wird eine Lenkvorrichtung beschrieben bei welcher keine mechanische Verbindung zwischen den gelenkten Rädern und dem Lenkrad vorgesehen ist. Die Lenkeinrichtung betreibt einen Lenkmotor des Lenkmechanismus entsprechend einem Lenkdrehmoment zur Vergrösserung oder Verkleinerung eines Lenkwinkels. Das Lenkdrehmoment wird zu diesem Zweck anhand der durch das Detektieren eines Drehwinkels eines mit der Drehwelle des Lenkrades verbundenen Elektromotors und eines zum Elektromotor fliessenden elektrischen Stromes erhaltenen Ergebnisses, eines Trägheitsmoments des Elektromotors berechnet. Ein Drehmomentsensor, wie eine Torsionsfeder, ist dadurch nicht notwendig. In einer weiteren Schrift, der DE 44 36 784 A1 wird ein absolutes Positionsmesssystem für ein Längenmessystem oder ein Winkelmessystem beschrieben.

Der Massstab eines solchen Messsytems trägt eine inkrementale Strichteilung, die gleichzeitig mit einem die Absolut-Position des Teilungsträgers beschreibenden Code A,B versehen ist. Der Code wird dadurch gebildet, dass die Striche der Teilung eine unterschiedliche Breite aber konstanten gegenseitigen Abstand k besitzen. Dieser Strichcode wird von einem CCD-Array ausgelesen, auf dem die Strichteilung abgebildet wird. Auf ähnliche Weise, wie in der zuvor beschriebenen DE 44 36 784 A1, wird in der US 5,539,993 in einem Längenmesssystem die variierende Breite einer Strichteilung mit einem Array gemessen zur absoluten Lagebestimmung, wobei das Array aus einer in Linie angeordneten Mehrfachsensoranordnung besteht wodurch mindestens 2 Striche gleichzeitig erfasst werden.

Neben den bekannten Vorteilen solcher Lenkvorrichtungen wie beispielsweise der geringe Energieverbrauch oder die Möglichkeit der guten Adaption an das gewünschte Lenkverhalten des Kraftfahrzeuges gibt es jedoch eine Vielzahl von neuen Problemen zu lösen.

In erster Linie muss das Ansprechverhalten und die Präzision des Lenkeinschlages der Lenkvorrichtung mindestens so gut sein, wie bei einer konventionellen mechanischen Lenkvorrichtung mit hydraulischer Lenkunterstützung. Daraus leiten sich mehrere Forderungen an die Lenkvorrichtung ab. Zunächst muss der Fahrerwunsch, das heisst der gewünschte Lenkeinschlag von der Lenkvorrichtung bestimmt werden. Dabei muss die Winkelbestimmung der rotierenden Komponenten der Einrichtung in Bezug auf die nicht rotierenden Komponenten sicher und schnell erfolgen. Als nächstes muss aus den Messwerten schnell und sicher die notwendig Leistungseinbringung in den elektrischen Hilfskraftantrieb bestimmt werden. Weiterhin muss die Hilfskraft bzw. der elektrische Antrieb unter Umgehung der mechanischen Kopplung möglichst verlustfrei in das Lenkgetriebe eingespeist werden. Schliesslich muss der tatsächlich erreichte Lenkwinkel gemessen werden, um den Positionierungs - Regelkreis zu schliessen. Dem Positionierungs - Regelkreis untersetzt muss der Regelkreis zur Leistungsansteuerung des elektronisch kommutierten Elektromotors geschlossen werden.

Die bekannten Systeme haben jedoch mehrere markante Nachteile. So können Absolutbeträge der Winkel erst nach Durchlaufen eines relativ grossen Winkelbereiches, beispielsweise einer ganzen Umdrehung, erfasst werden. Weiterhin besteht die Gefahr des Verpassens eines markierten Startpunktes oder eines Zählimpulses, so dass die Winkelmessung fehlerhaft ist. Weiterhin muss ein Startpunkt festgelegt sein. Das führt entweder zur Verringerung der Auflösung in der Umgebung des Startpunktes durch Verwendung einer längeren Impulsdauer oder zur Notwendigkeit eines separaten Startpunkt-Erkennungssensors. Ausserdem benötigen die meisten Systeme mehrere Sensoren, teilweise sogar mehr als 2 Sensoren zur Erfassung der Winkellage.

Die Aufgabe der vorliegenden Erfindung besteht darin die Nachteile des Stand der Technik zu beseitigen. Insbesondere besteht die Aufgabe darin, zum einen die Kommutierung des Stromflusses mit der Drehlage des Motors in Übereinstimmung zu bringen und zum anderen sehr schnell und gleichmässig zu regeln, damit in das Lenksystem keine Drehmomentschwankungen eingebracht werden, die der Fahrer als Welligkeit oder Ripple beim Lenken spürt. Das bedeutet, dass der Winkel des Rotors in Bezug auf den Stator des Elektromotors schnell und sicher erfasst werden muss. Ausserdem soll die Anordnung zuverlässig, einfach und wirtschaftlich realisierbar sein.

Der Erfindungsgegenstand befasst sich mit der sensorischen Erfassung des Rotorwinkels als Basis für die optimale Regelung des Lenksystems insbesondere der elektronischen Ansteuerung des Elektromotors.

Die Erfindung löst die Aufgabe der sensorischen Erfassung der Winkel zwischen den drehbewegten Komponenten in Bezug auf die nicht drehbewegten Komponenten durch eine Vorrichtung, gemäss Anspruch 1, in einfacher Weise und mit vergleichsweise wenig sensorischem Aufwand. Die abhängigen Ansprüche zeigen weitere bevorzugte Ausführungsformen. Anspruch 14 beinhalten das Verfahren zur Lösung der Aufgabe.

Erfindungsgemäss umfasst die Elektrische Servolenkvorrichtung für Kraftfahrzeuge eine Drehwinkelsensoranordnung zur Erfassung der Position der Lenkbewegung, wobei diese eine relativ oder entsprechend zur Lenkbewegung mit drehende Trägerplatte mit mindestens einer Codespur und mindestens einen fest stehenden, auf die Codespur wirkenden, Sensor enthält, wobei die Codespur kreisförmig um die Drehachse (Z) der Trägerplatte angeordnet ist und Markierungen aufweist zur Erzeugung eines nacheinander wechselnden Bit-Musters und die 360° des Kreisumfanges dividiert durch die Anzahl der Markierungen auf dem Kreisumfang einen Taktwinkel (ß) definiert und das Bitmuster durch eine phasenverschobene Anordnung von Markierungen in Bezug zur festen Einteilung des Taktwinkels (ß) bestimmt ist. Hierbei sind vorteilhafter weise die ausgewählte Markierungen (41) an einigen vordefinierten Stellen mit einem Versatz (δ) auf der Trägerplatte (8) aufgebracht, sodass das Bit - Muster an diesen Stellen gegenüber dem Takt (ß) verzögert wechselt.

Eine erfindungsgemässe bevorzugte elektrische Servolenkvorrichtung enthält eine Sensoranordnung mit zwei parallel angeordneten bzw. konzentrisch angeordneten Codespuren, wie dies nachfolgend näher beschrieben wird.

Der Messaufnehmer umfasst eine Sensoreinheit, die mit der nichtdrehenden Komponente fest angeordnet ist, bestehend aus 2 Sensoren und zweier den Sensoren zugeordneten, mit der drehbaren Komponente verbundenen, Codespuren auf einer Trägerplatte. Auf jeder der beiden Codespuren befindet sich ein abwechselndes '1'/'0' - Muster in gleichen Winkelabständen zur Erzeugung digitaler Signale. Dabei sind die '1'/'0' Muster der beiden Codespuren zueinander genau gleich angeordnet. Das heisst, wenn für eine bestimmte Winkellage das Muster der einen Codespur gerade von '1' nach '0' wechselt , wechselt das Muster der anderen Codespur genau in der gleichen Richtung. Das Muster kann bevorzugt durch Permanentmagnete bzw. mit einer Magnetisierung, beispielsweise mit einer entsprechenden Nord-Süd-Polung oder durch eine Lochmaske oder auch durch andere vergleichbare Mittel, je nach verwendeter Sensorart, gebildet sein. Die Sensoren können entsprechend im Falle der Verwendung von Permanentmagneten Hallsensoren oder für Lochmasken einfache optische Durchlichtsensoren, bestehend aus Lichtquelle und Photohalbleiter, sein. Bei der bevorzugten Verwendung von Permanentmagneten zur Darstellung der Codespuren, kann auch einfach eine breite Codespur, als zweidimensionales Codespur-Muster, aufgetragen sein, die in unterschiedlichen Abständen vom Drehpunkt gesehen durch 2 Sensoren abgetastet werden.

Die Verwendung von 2 verschiedenen Sensoren mit 2 zugehörigen Codespuren dient dabei vor allem zwei wichtigen Zielen. Zum einen gibt die eine Codespur, durch die gleichmässige Anordnung der Markierungen, einen festen Takt im Verhältnis zum Drehwinkel an. Zum anderen sind die beiden Sensoren etwas versetzt zueinander angebracht. Dadurch wird der Wechsel des Signals, verursacht durch den Wechsel von Markierung '0' auf '1', zuerst in einer der beiden Signale der beiden Codespuren festgestellt werden. Daraus kann dann die Drehrichtung der Trägerplatte bestimmt werden.

Erfindungsgemäss wechseln auf einer der beiden Codespuren an einigen vordefinierten Stellen das abwechselnde '1'/'0' - Muster nicht in genau äquidistanten Winkelabständen, sondern etwas verzögert bzw. versetzt. Das bedeutet, dass diese jeweilige ausgewählte Markierung mit einem Versatz auf die Trägerplatte aufgebracht wird. Mit diesen gegenüber dem Takt verzögerten Wechseln kann wiederum ein bestimmtes Muster gebildet werden. Die Verwendung dieses Musters gestattet dann, eine schnelle Bestimmung der absoluten Winkellage. Nach dem erstmaligen Durchlaufen einer vorher festgelegten Grösse der Winkeländerung dem Anfangserkennungswinkel, der mit der Musterlänge korespendiert, kann dann der Absolutwert des Winkels innerhalb einer vorgegebenen Codierlänge in Bezug auf die Nulllage und Vielfache der Codierlänge bestimmt werden. Die Musterlänge sollte dabei stets gleiche Winkellängen, d.h. die gleiche Anzahl Takte, umfassen aber aus unterschiedlichen Anzahlen von Versätzen von Markierungen bestehen. Die dabei möglichen entstehenden Muster und ihre Zuordnung zu festen Winkelwerten werden in einem Datenspeicher in Form einer Wahrheitstabelle hinterlegt oder die Muster sind so gestaltet, dass sie mathematisch auf den jeweiligen Winkel umgerechnet werden können. Hierzu können die heute gebräuchlichen elektronischen Speicher und Prozessoren vorteilhaft verwendet werden. Es ist hierbei besonders bevorzugt wenn das durch die phasenverschobene Anordnung von Markierungen auf der Codespur bestimmte Bitmuster sich während der Drehung der Trägerplatte bei jedem Takt(ß) ändert und diese eindeutig und einmalig ist, um die Position sofort und eindeutig identifizieren zu können. Diese vorgegebenen, eindeutigen Muster bzw. Worte werden in dem Speicher abgelegt und können mit dann mit dem tatsächlichen Muster der Codierung verglichen werden woraus die Position ermittelt werden kann. Weiterhin kann es vorteilhaft sein wenn die nicht mit einem Versatz angeordneten Markierungen mit einer Teilung eines halben Taktes (ß/2) angeordnet sind.

Der Vorteil der erfindungsgemässen Methode besteht nun darin, dass nach dem ersten Durchlaufen mehrerer Wechsel der Markierung bis zum Durchlaufen der festgelegten Winkeländerung - dem Anfangserkennungswinkel - sofort bei jedem weiteren Wechsel der Markierung bereits der genaue Winkelwert bestimmt werden kann.

In einer Weiterentwicklung der Erfindung wird auf das Taktsignal der einen der beiden Codespuren verzichtet. Dieser Takt wird dann nach Durchlaufen von mehreren Wechseln der Markierung der einen verbleibenden Codespur, beispielsweise durch einfache Division der Anzahl der Wechsel geteilt durch die verstrichene Zeit, bestimmt. Die Versätze der Markierungen werden dann im Anschluss auf den so berechneten Takt bezogen und in gleicher Weise weiterverarbeitet. Die Bestimmung der Drehrichtung erfolgt dann entweder durch eine Wahrheitstabelle, die die Drehrichtung enthält oder durch einen Versatz der Markierungen, bei dem sowohl der Beginn der '1' als auch das Ende der '1' gegenüber dem Takt verzögert wird. Dadurch kann, beispielsweise durch eine einfache Differenzbildung des Sensorsignals zu dem aus dem Takt konstruierten Sensorsignal, ein Muster mit positiven und negativen Signalspitzen erzeugt werden. Aus der einfachen Prüfung, ob zuerst die positive oder die negative Signalspitze auftritt, wird die Drehrichtung direkt bestimmt.

In allen Ausführungsformen des erfindungsgemässen Verfahrens können das oder die realen Sensorsignalformen zusätzlich gesampelt (abgetastet) werden. Hierdurch kann die Signaländerung weiter und noch präziser aufgelöst werden. Durch die Sampelung der Signale können weitere Flankenwechsel erzeugt werden, aus deren Abzählung Zwischenwerte für den Winkel bestimmt werden können. Dadurch wird die Messauflösung noch weiter erhöht.

Ziel aller in der Erfindung gezeigten Massnahmen ist, den Winkel möglichst schnell und genau und sicher zu bestimmen. Hierzu müssen einerseits die physikalischen Grenzen in Bezug auf herstellbare geometrische Grössen von entsprechenden Markierungen, auf den Signal-Rausch-Abstand und weiteres beachtet werden. Die Erfassung der Winkel in digitalen Rechnern bedarf je nach Auflösung unterschiedlich grosser Wortbreiten. Durch die richtige Grösse der Wortbreite, beispielsweise 4bit oder 8bit, kann die Rechengeschwindigkeit entscheidend beeinflusst werden. Dabei ist zwischen den Wortbreiten sowohl für die Rechenoperationen als auch für Speicheroperationen zu unterscheiden. Die optimale Auslegung hängt von der Architektur der Hardware ab und kann mit dem vorgestellten Messverfahren in Einklang mit den geforderten Messauflösungen und - geschwindigkeiten gebracht werden. Als Parameter dazu dienen die Länge der Wahrheitstabelle, die Samplerate in Bezug auf die Drehzahlen, Durchmesser und geometrischen Abmessungen der Markierungen und weitere Grössen.

Dieselbe Methode ist nicht nur für die bevorzugte Drehwinkelmessung anwendbar , sondern auch für Längenmessungen geeignet. Dann muss jeweils die Drehung durch eine Translation und der Winkelbezug durch einen Längenbezug ersetzt werden. Die drehbare Komponente ist dann eine längsverschiebbare Komponente und die Winkeleinheiten und Winkelversätze sind entsprechend Längeneinheiten und Längenversätze. Für Codespuranordnungen mit den zugehörigen Sensoren sind besonders die magnetischen Mittel geeignet und somit bevorzugt. Es können aber auch optische, kapazitive oder induktive Mittel oder deren Kombinationen eingesetzt werden.

Ein besonderer Anwendungsfall für die Nutzung der Winkelmessung besteht.in der Bestimmung des Winkels des Rotors in Bezug auf die Polschuhe des Stators eines Elektromotors, für die Anwendung als elektrische Hilfskraft in einem Lenksystem (Servolenkung). Dies ist für die korrekte und präzise Ansteuerung von elektronisch kommutierten Motoren besonders wichtig. Vor allem muss auch beim Anlauf des Motors die richtige Drehrichtung sichergestellt werden. Die Codierlänge kann hier vorteilhafterweise gleich dem Winkel von einem oder mehreren Polschuhen gesetzt werden.
Dabei ist die Verwendung der Lagerabdeckung der Getriebeanordnung, wie insbesondere bei Verwendung eines Kugelgewindetriebs, als Trägerplatte der Codespuren besonders vorteilhaft.

Am bevorzugten Beispiel der Verwendung von Permanentmagnetischen Markierungen auf den Codespuren und der Verwendung von Hallsensoren wird das Verfahren zur Signalaufbereitung und Auswertung an Hand von schematischen Figuren gezeigt.

Es zeigen:
Figur 1 zeigt den schematischen Aufbau einer Lenkvorrichtung mit Hilfskraftunterstützung.
Figur 2 zeigt die Unordnung der Sensoranordnung, deren Lage zu den Polschuhen des Elektromotors und die schematische Zuordnung zu den Signalcodebits.
Figur 3 bestehend aus Figuren 3a und 3b zeigt die Signalverläufe der Hallsignale sowie den Bezug zu den Markierungen auf den Codespuren.
Figur 4 bestehend aus Figuren 4a, 4b und 4c zeigt die Signalverläufe der um den Winkelversatz der beiden Sensoren bereinigten Hallsignale und das Kombinationssignal
Figur 5 bestehend aus Figuren 5a, 5b, 5c und 5d zeigt die Signalverläufe der um den Winkelversatz der beiden Sensoren bereinigten digitalisierten Hallsignale sowie den Bezug auf die Markierungen auf den Codespuren und dem Kombinationssignal sowie die Signalcodebits.
Figur 6 zeigt für ein anderes Beispiel die Signalverläufe der um den Winkelversatz der beiden Sensoren bereinigten digitalisierten Hallsignale und dem digitalisierten Kombinationssignal.
Figur 7 zeigt eine Wahrheitstabelle zur Bestimmung des momentanen Winkels
Figur 8 bestehend aus Figuren 8a, 8b, 8c und 8d zeigen andere Beispiele für Codierungen mit den zugehörigen Wahrheitstabellen.

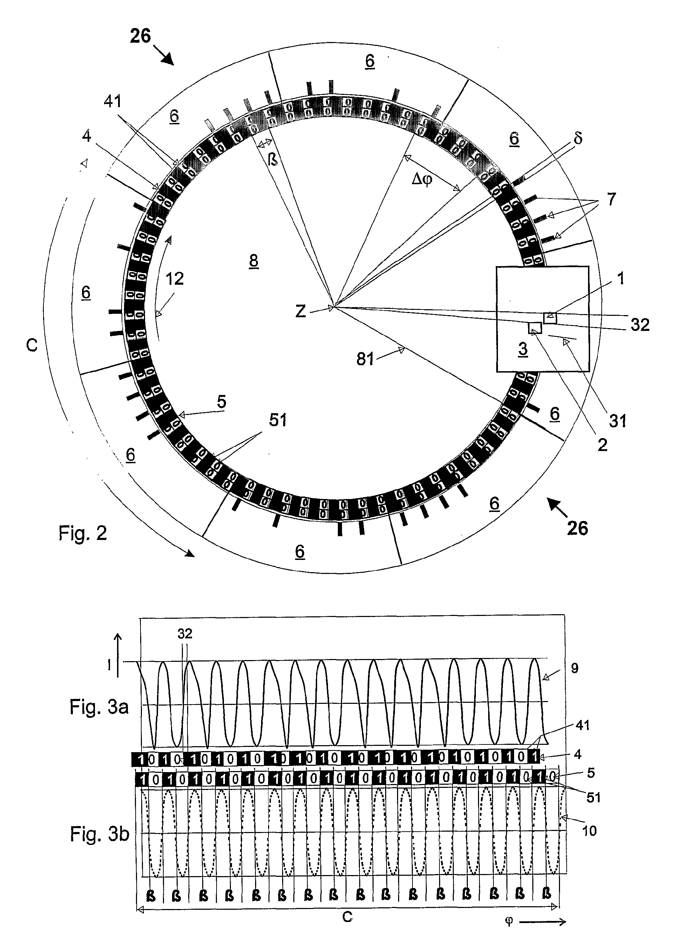

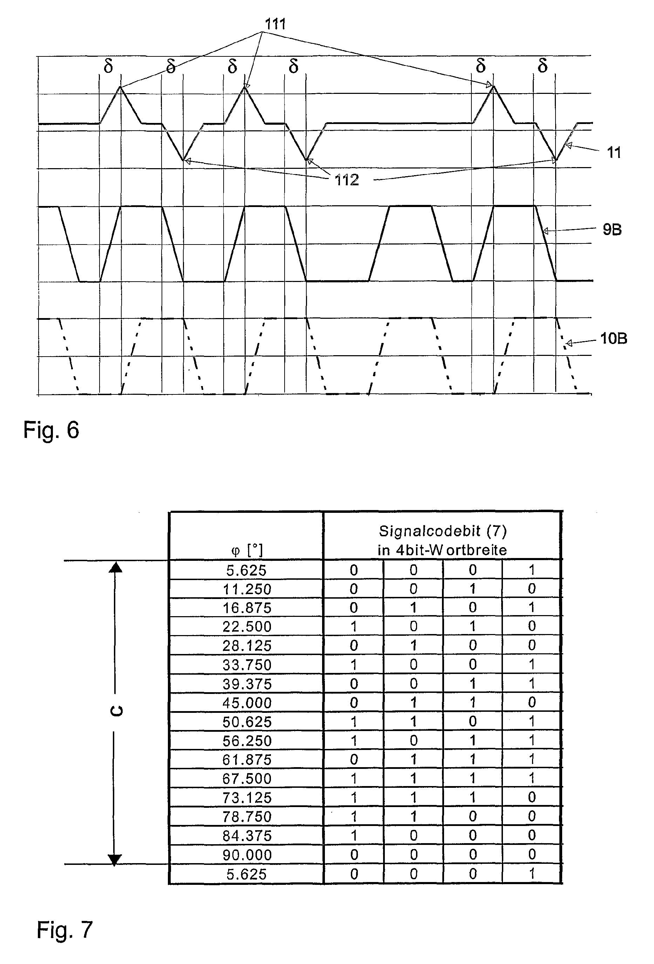

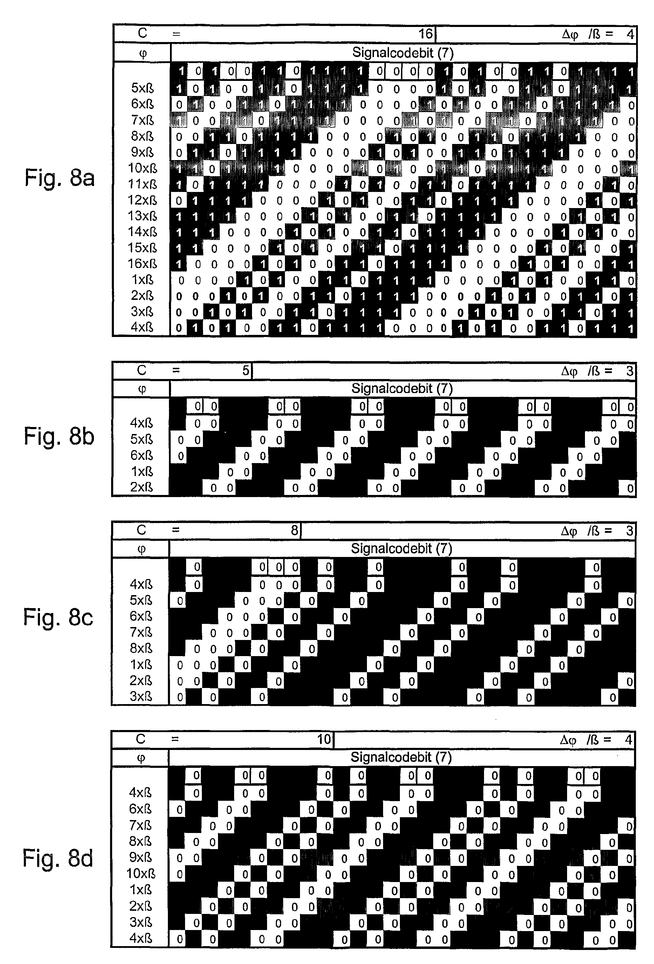

Die Darstellungen in den Figuren 2, 3, 4, 5, 7 und 8a beziehen sich alle auf ein und dasselbe Beispiel. Die Figur 6 soll nur die Möglichkeit der Signalauswertung von positiven Signalspitzen 111 und negativen Signalspitzen 112 zeigen. In den Figuren 8b, 8c und 8d sind Beispiele für andere Varianten der Codierung gezeigt, um einen Hinweis zu geben, wie nach Vorgabe der Codierlänge C und des Anfangserkennungswinkels Δϕ ein Schema für geeignete Winkelversätze δ auf den beiden Codespuren 4, 5 und damit eine geeignete Festlegung der Markierungen 41, 51 gefunden werden kann.

Bei der Darstellung der digitalisierten Signale ist in den jeweiligen Figuren die Signalflanke deutlich dargestellt. Der Anstieg wird durch die jeweilig verwendete Elektronik bestimmt. Für die Auswertung spielt der Anstieg der Signalflanke jedoch nur eine untergeordnete Rolle. Es ist in den Darstellungen daher darauf verzichtet worden, die Flanken unendlich steil darzustellen.

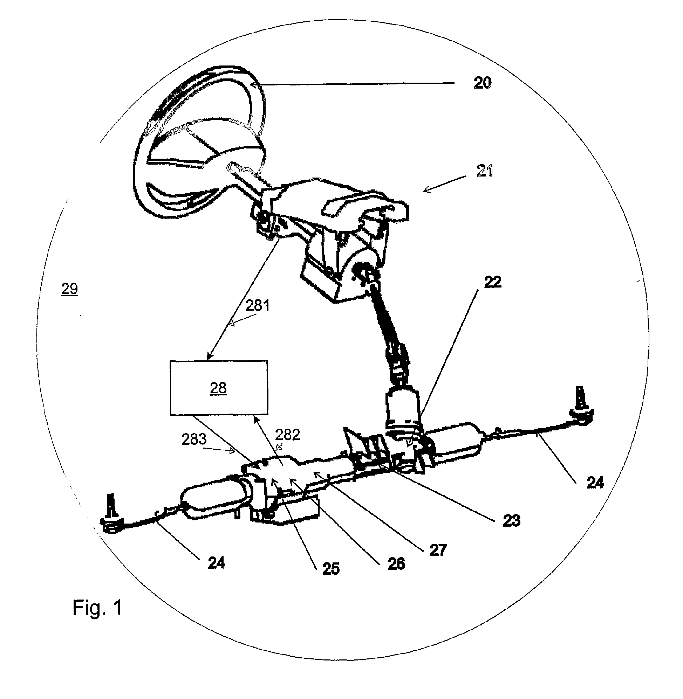

Der in Figur 1 gezeigte schematische Aufbau einer Lenkvorrichtung (29) mit Hilfskraftunterstützung entspricht im Wesentlichen dem Stand der Technik. Sie besteht unter anderem aus einem Steuerrad 20, einer Lenksäule 21, dem Lenkgetriebe 22 und den beiden Spurstangen 24. Die Spurstangen 24 werden durch die Zahnstange 23 angetrieben. Zur Hilfskraftunterstützung dient die aus den Komponenten Servomotor 25, der Sensoranordnung 26 und dem Kugelgewindetrieb 27 gebildeten Antriebseinheit. Die Erfindung bezieht sich auf die Sensoranordnung 26 und in der speziellen Weiterbildung in der Anordnung in einer Lenkvorrichtung für ein Kraftfahrzeug. Dabei wird der Fahrerwunsch durch das Steuerrad 20 über eine nicht gezeigte Sensorik als Signal 281 in ein Steuergerät 28 eingespeist. Aus der Sensoranordnung 26 wird das Sensorausgangssignal 282, der momentane Drehwinkel und daraus abgeleitet der Lenkwinkel in das Steuergerät 28 eingespeist. Im Steuergerät wird daraus die entsprechende Steuerspannung 283 für den Elektromotor oder Servomotor 25 bestimmt und an den Servomotor 25 ausgegeben. Dabei ist für eine feinfühlige und schnelle Regelung die schnelle Erfassung des momentanen Winkels ϕ erforderlich. Dabei genügt es für die Ansteuerung des Servomotors 25 die momentane Lage des Stators (hier nicht gezeigt) zu den Polschuhen 6 des Stators (hier nicht dargestellt) genau zu wissen. Der gesamte Winkel ϕ über eine vollständige oder gar mehrere Umdrehungen, aus dem sich der Lenkwinkel bestimmen lässt, muss nicht mit der hohen Geschwindigkeit bestimmt werden und kann durch Abzählen der Durchläufe durch den Winkelbereich der Codierlänge C bestimmen.

Figur 2 zeigt beispielsweise die bevorzugte Anordnung der Sensoranordnung 26 bestehend aus den mit der drehbaren Komponente verbundenen Trägerplatte 8 mit den beiden Codespuren 4 und 5 mit den Markierungen 41 bzw. 51 sowie der Drehachse Z und der mit der nichtdrehenden Komponente verbundenen Sensoreinheit 3 und den darauf angeordneten Sensoren 1 und 2. Die beiden Sensoren sind mit Vorteil um einen Winkelversatz 32 versetzt angeordnet. Die versetzte Sensoranordnung ermöglicht eine bessere Erkennung der Laufrichtung. Zu den nichtdrehenden Komponente sind beispielsweise auch die Polschuhe 6 des Stators des Servomotors 25 zu zählen. Die Nulllage des Winkels des Systems ist mit der Nulllage 31 auf der Sensoreinheit 3 und der Nulllage 81 der Trägerplatte 8 markiert. Zur Verdeutlichung der Markierungen beispielsweise der abwechselnden Nord-Süd-Pol-Ausrichtung einer permanentmagnetischen Spur sind hier die Bezeichnungen '0' und '1' gewählt oder gleichbedeutend 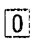 und 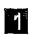 oder gleichbedeutend 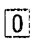 und 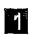 in den Darstellungen gewählt.

Hier dargestellt ist die Anordnung der Codespuren in gleichläufiger Polung. Es ist auch möglich die Codespuren gegenläufig zu polen. Zur Verdeutlichung der gegenläufigen Anordnung der Polung der beiden Codespuren sind in einer der beiden Spuren nur die '1'gegen die '0'- und die '0' gegen die '1' -Kennzeichnung auszutauschen.

Die Markierungen '0' und '1' haben jeweils den Winkel von ß/2. Ein Polpaar '0'/'1' hat damit den Winkel = dem Takt ß und entspricht einem bit in der digitalen Weiterverarbeitung der Signale. Die Codierlänge C ist der Winkelbereich für den der Winkel nach erstmaligem Durchlaufen der Anfangserkennungswinkel Δϕ exakt bestimmt werden kann. Der Winkel Δϕ entspricht im Beispiel genau 4 bit oder 4 Takte.
Die zweite Codespur 5 hat die Aufgabe den Takt ß vorzugeben. Wird die Trägerplatte 8 in Drehung versetzt generiert sich aus dem Hallsignal 10 des Sensors 2 das Taktsignal ß.
Auf der ersten Codespur 4 ist wie oben bereits erwähnt in einigen Markierungen 41 ein Versatz δ eingebracht , das heisst eine der Polungen hier beispielsweise die '1'-Polung wird um den Winkel δ verlängert.
Im Beispiel hat der Servomotor 25 8 Polpaare und eine Codierlänge von 90°, was einer Länge von 16bit entspricht, bei einem Anfangserkennungswinkel Δϕ von 4 bit, was einem Winkel von 16,875° entspricht. Aus den Versätzen δ werden die Signalcodebits 7 gebildet, die zur Bestimmung des Winkels ϕ herangezogen werden. Grössere Wortbreiten ermöglichen eine bessere Auflösung, allerdings bei höherem Aufwand.

Figur 3a zeigt das Hallsignal 9 mit der Signalgrösse I des Sensors 1 in Bezug auf die Markierungen 41 der ersten Codespur 4. In Figur 3b ist das entsprechende Hallsignal 10 des Sensors 2 in Bezug auf die Markierungen 51 der zweiten Codespur 5. Der Winkel ϕ wird mit Drehung in Drehrichtung 12 grösser. Die Darstellung umfasst eine Codierlänge C, das heisst 16 Winkel einer '0'/'1'-Markierung 51. Beispielhaft ist ein Winkelversatz 32 der beiden Sensoren 1 und 2 zueinander gezeigt.

Durch den Winkelversatz 32 der beiden Sensoren 1 und 2 kann in einfacher Weise die Drehrichtung bestimmt werden. Tritt der Wechsel von '0'nach '1' im Hallsignal 9 vor dem Hallsignal 10 auf, dreht sich die Trägerplatte 8 in Drehrichtung 12. Entsprechend dreht sich die Trägerplatte entgegen der Drehrichtung 12, wenn der Wechsel von '0' nach '1' zuerst im Hallsignal 10 erfolgt. Der Winkelversatz 32 muss dazu kleiner als ß/2 sein.

Für die weitere Auswertung ist der Winkelversatz 32 nicht erforderlich, so dass er elektronisch oder numerisch korrigiert wird. Daher sind in allen weiteren Figuren die Hallsignale um den Winkelversatz 32 der beiden Sensoren 1 und 2 korrigiert, d.h. auf einen Winkelversatz von 0° verschoben, dargestellt.

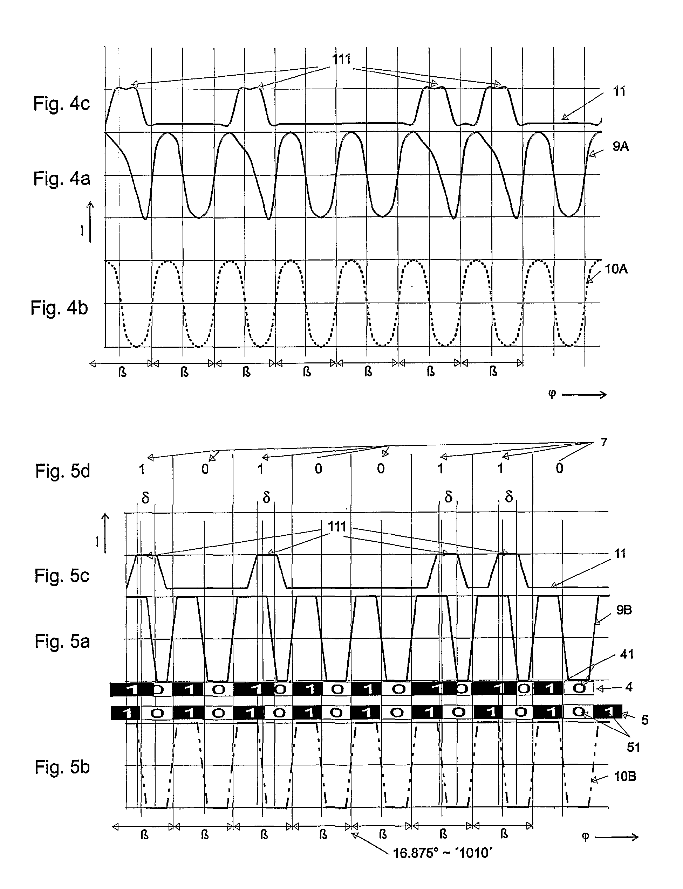

Figuren 4a und 4b zeigen die, um den Winkelversatz korrigierten, Hallsignale 9A bzw. 10A des Sensors 1 bzw. 2 über dem Drehwinkel aufgetragen. Weiterhin ist in Figur 4c das Kombinationssignal 11 mit den Signalspitzen 111 dargestellt. Hier sind, wie in Figur 3 die Signale für den Fall, dass die Polungen der beiden Codespuren gleichläufig angeordnet sind, gezeigt. Im einfachsten Fall kann das Kombinationssignal als Differenz aus den Hallsignalen 9A und 10A gebildet werden.

Im nächsten Schritt erfolgt die Digitalisierung der Hallsignale. Die weiteren Figuren 5 und 6 zeigen eine einfache Digitalisierung auf 2 Schwellwerte des Signals z.B. I-Signal >0 und I-Signal <0. Zur Erhöhung der Auflösung kann jedoch auch eine Sampelung, beispielsweise auf mehrere Schwellwerte der Hallsignale 9 und 10 erfolgen.

Figur 5a und 5b zeigt das digitalisierte Hallsignal 9B bzw. 10B des Sensors 1 bzw. 2 über dem Drehwinkel ϕ aufgetragen und um den Winkelversatz 32 der beiden Winkelsensoren in der Phase verschoben. Zur Verdeutlichung sind die Lage der Markierungen 41, 51 der Codespuren 4 und 5 dargestellt. Die Figur 5c zeigt das digitalisierte Kombinationssignal 11 mit den Signalspitzen 111, die aus den Winkelversätzen δ der Markierungen 41 der Codespur 4 resultieren. Die Figur 5d zeigt die aus den Signalspitzen 111 generierten Signalcodebits 7 mit den Werten 0 oder 1, die dem jeweiligen Takt ß zuzuordnen sind. Der Darstellung ist zu entnehmen, wie nach dem Durchlauf der ersten 4 Takte ß die Folge von Signalcodebits 7 "1 0 1 0" aus dem Kombinationssignal 11 erzeugt wurde. Dieser Wert entspricht in unserem Beispiel genau 16.875° ab dem Startwinkel 81, 31 oder dem Startwinkel 81 zuzüglich der Codierlänge C (im Beispiel 90°) gemessen.
Die in der Figur 7 dargestellte Wahrheitstabelle, die zu den Darstellungen in den Figuren 2, 3, 4 und 5 passt, zeigt, wie anhand der aus den Signalspitzen 111 des Kombinationssignals 11 und den zugehörigen Signalcodebits der Winkel ϕ bestimmt wird.
In der Tabelle 1 ist der Ablauf der Winkelerkennung und der Aufbau der Wahrheitstabelle anhand des in den Figuren dargestellten Beispiels gezeigt. Beginnt sich die Trägerplatte 8 in Drehrichtung 12 von der Nulllage 81, 31 zu drehen, wird der Takt ß, d.h. eine Anzahl von '0'/'1'-Wechseln durchlaufen. Der Takt ß korrespondiert mit dem Winkeln ϕ der hier in der Folge 5.625°, 11.25°,..... dargestellt ist. Dabei werden durch den Winkelversatz ϕ der Markierungen die Signalspitzen 111 im Kombinationssignal 11 und somit die Signalcodebits 7 erzeugt. Das korrespondiert mit den in Figur 5d gezeigten Signalcodebits 7 mit den Digitalwerten 0 oder 1. Der Speicher, der in unserem Beispiel 4bit Wortbreite besitzt, füllt sich bit für bit, wie im unteren Teil der Tabelle 1 dargestellt ist. Nach Durchlaufen des Winkels von 16.875° ist der Speicher mit einem vollständigen 4bit-Wort aus den Signalcodebits 7 gefüllt. Ab jetzt kann direkt aus der Wahrheitstabelle, wie sie in Figur 7 gezeigt ist, der momentane Winkelwert abgelesen werden.

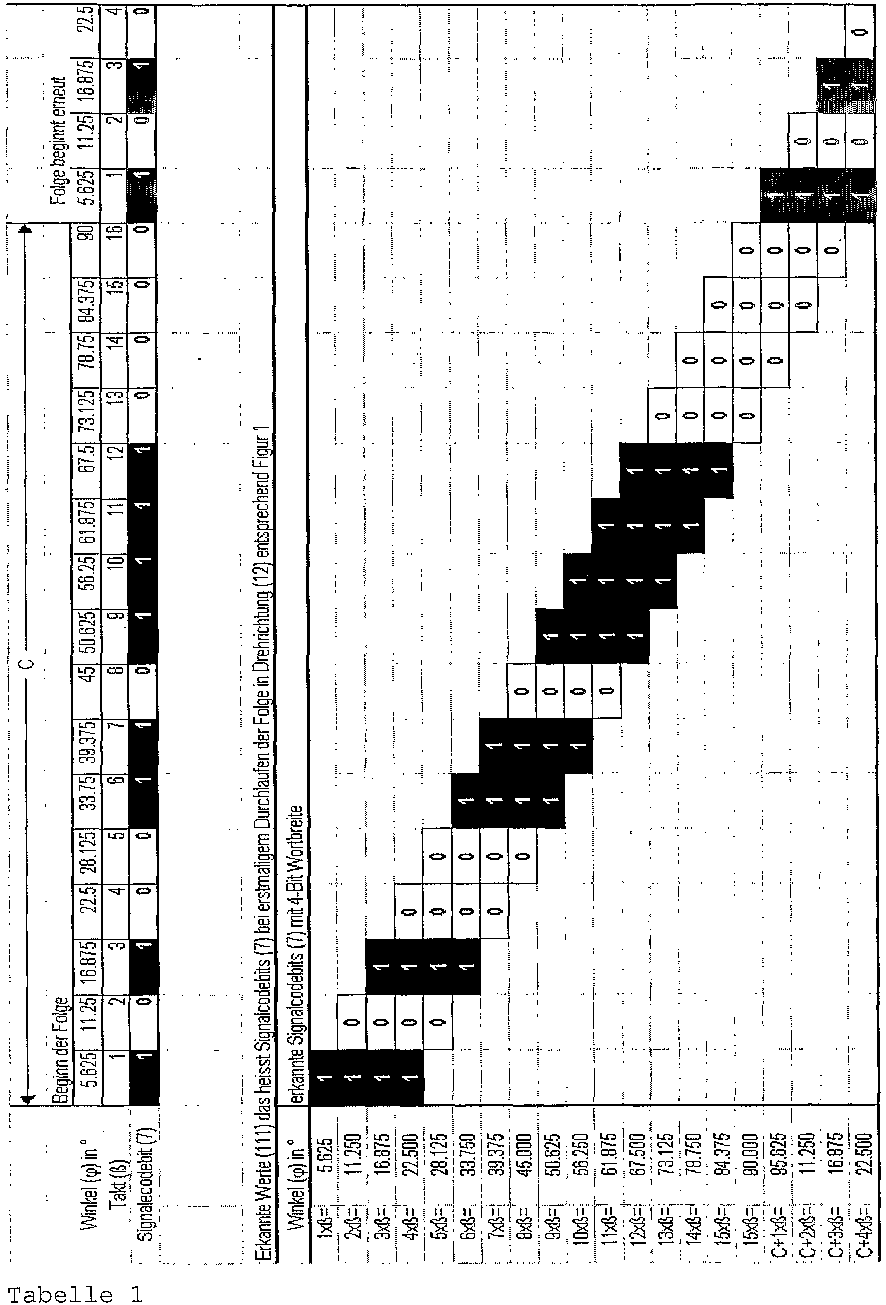

Dabei muss beachtet werden, dass je nach Drehrichtung die Einspeicherung in den Speicher entweder auf dem höchsten oder dem niedrigsten bit des Wortes im Speicher, unter Verschiebung der bereits im Speicher befindlichen bits, erfolgen muss.

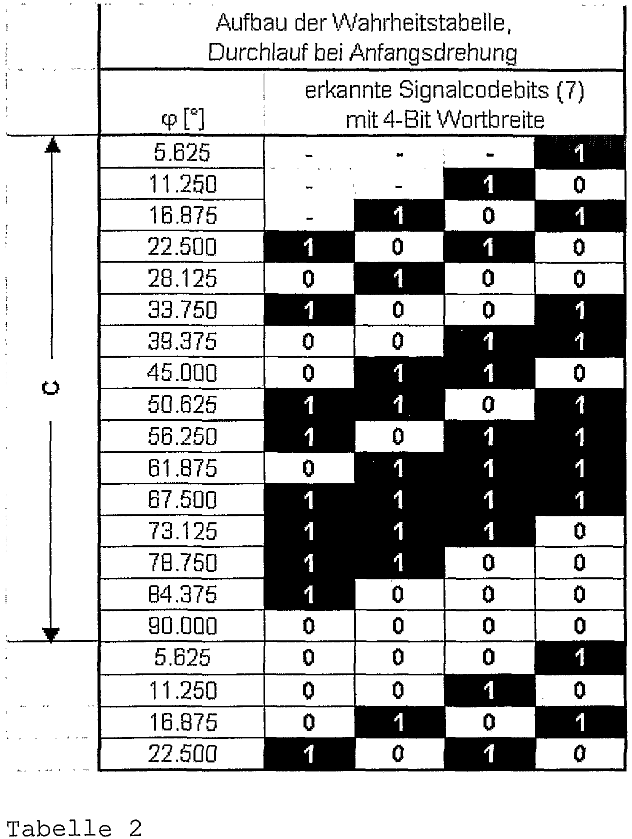

In der Tabelle 2 ist der Speicherinhalt während des Aufbaus von der Nulllage 81, 31 mit der Wortbreite von 4 bit für den jeweiligen Takt ß / Winkel ϕ gezeigt. Wie anhand des Aufbaus der Tabelle 1 und Tabelle 2 zu erkennen ist entspricht die Wortbreite auch der Anzahl Takte bis der erste Winkel eindeutig erkannt werden kann und damit dem Anfangserkennungswinkel Δϕ/ß.

Die Figur 8 zeigt mehrere Muster von Wahrheitstabellen als Beispiel, wie für verschiedene Codierlängen C und Anfangserkennungswinkel Aϕ mit den zugehörigen Wortbreiten Aϕ/ß eine Folge von Signalcodebits 7 festgelegt werden kann, damit nach erstmaligem Durchlauf der Anfangserkennungswinkel Δϕ bei jedem weiteren Durchlauf des Winkels ß der Absolutwert des Drehwinkels bestimmt werden kann.

Dabei ist in Figur 8a nocheinmal unser Beispiel gezeigt. In Figuren 8b, 8c, und 8d sind Darstellungen für die Codierlängen von 5, 8 bzw. 10 und Wortbreiten von 3bit, 3bit bzw. 4bit gegeben.

Aus den Beispielen mit den Tabellen ist ersichtlich, dass die nacheinander folgenden, um den Winkel β Versetzten, Bitmuster derart gewählt werden, dass diese immer eindeutig sind und als einmalige Muster erscheinen , also singulär auftreten, womit jederzeit eine eindeutige Winkellagenerkennung möglich ist durch Vergleich der gemessenen Muster mit den gespeicherten Mustern

Figur 6 zeigt für ein anderes Beispiel das digitalisierte Hallsignal 9B des Sensors 1 und das digitalisierte Hallsignal 10B des Sensors 2 über dem Drehwinkel aufgetragen und um den Winkelversatz 32 der beiden Winkelsensoren in der Phase verschoben. Hier sind die Markierungen jedoch so um den Winkel δ versetzt, dass ein Kombinationssignal 11 mit positiven Signalspitzen 111 und negativen Signalspitzen 112 entsteht. Aus der zeitlichen Reihenfolge des Auftreffens der positiven Signalspitze 111 und der negativen Signalspitze 112 wird die Drehrichtung bestimmt. Kommt die positive Signalspitze 111 vor der negativen Signalspitze 112, dreht sich die Trägerplatte 8 in Drehrichtung 12. Kommt die negative Signalspitze 112 vor der positiven Signalspitze 111, so dreht sich die Trägerplatte 8 entgegen der Drehrichtung 12.
Für den Fall, dass nicht entschieden werden kann, welche Signalspitze 111, 112 früher kommt, wird die Signalflanke des Signals 9B mit genutzt. Wechselt das Signal 9B vom niedrigen auf den hohen Wert und wird gleichzeitig die positive Signalspitze 111 bestimmt, so dreht sich die Trägerplatte in Drehrichtung 12. Wird jedoch die negative Signalspitze 112 gleichzeitig bestimmt, so dreht sich die Trägerplatte entgegen der Drehrichtung 12.

In der besonders kostengünstigen Weiterbildung des Systems wird der Sensor 2 weggelassen und das daraus resultierende taktgebende Signal 10B numerisch aus der verstrichenen Zeit und den '0'/'1'-Wechseln des Signals 9B wie oben bereits beschrieben bestimmt. Auf diese Weise kann das taktgebende Signal 10B mathematisch erzeugt werden und alle oben beschriebenen Verfahrensweisen zur Bestimmung des Winkels angewendet werden.

Die Anwendung dieser kostengünstigen Weiterbildung bedingt jedoch eine Verschlechterung der Auflösung, da mindestens drei eher mehr '0'/'1'-Wechsel zur Bestimmung des digitalisierten (Takt-) Signals 10B benötigt werden.

Sehr gute Ergebnisse können erzielt werden bei einem mittleren Leseradius von etwa 42mm, einem Magnetpolabstand von 1,5-3,5mm. So können beispielsweise 64 Polwechsel des Magnetfeldes dargestellt werden. Das bedeutet 64 vollständige Perioden des Hallsignals. Bei einer Samplerate von 1/32 ergibt das 4096 Flankenwechsel für jedes digitalisierte Signal 9B bzw. 10B. Da zwei Codierspuren zur Verfügung stehen, ergeben sich insgesamt 8192 Flankenwechsel. Das ergibt eine Winkelauflösung des Systems von etwa 0,044°.

Zur Verbesserung der Auflösung kann an die drehbare Komponente über ein Getriebe mit einer Übersetzung eine mit höherer Drehzahl drehende Komponente gekoppelt werden, mit der dann die Trägerplatte 8 verbunden ist. Auf diese Weise kann mit der gleichen Anzahl von Permanentmagneten und Hallsensoren die Winkelauflösung um den Übersetzungsfaktor des Getriebes erhöht werden.

Es ist klar, dass alle oben beschriebenen Ausführungen auch auf optische, elektrische, induktive oder kapazitive Messaufnehmer übertragbar sind. Ausserdem können in gleicher Weise auch Längen gemessen werden.

Ein spezieller Anwendungsfall besteht in der Anwendung der oben beschriebenen Vorrichtung zur geregelten Ansteuerung eines Elektromotors oder Servomotors 25 zum Antrieb eines Lenksystems für Kraftfahrzeuge mit elektrischer Hilfskraft. Hier besteht das Problem die Kommutation des Stromflusses je nach Winkellage des Rotors in Bezug auf den Stator des Servomotors 25 sicherzustellen. Dabei muss der Stromfluss so gleichmässig umgeschaltet werden, dass kein ungleichmässiges Drehmoment vom Elektromotor abgegeben wird. Hierzu wird die Trägerplatte 8 mit dem Rotor und die Sensoreinheit mit dem Stator des Elektromotors gekoppelt. Mit Hilfe der Messergebnisse wird dann die Lage des Rotors bezüglich der Polschuhe des Stators bestimmt. Die Codierlänge C und der Takt ß ist entsprechend dem Winkel zwischen den Polschuhen 6 festzulegen.

## Patentansprüche

1. Elektrische Servolenkvorrichtung (29) für Kraftfahrzeuge mit einer Drehwinkelsensoranordnung (26) zur Erfassung der Position der Lenkbewegung, wobei diese eine relativ oder entsprechend zur Lenkbewegung mit drehende Trägerplatte (8) mit mindestens einer Codespur (4) und einen fest stehenden, auf die Codespur (4) wirkenden, Sensor (1) enthält, wobei die Codespur (4) kreisförmig um die Drehachse (Z) der Trägerplatte (8) angeordnet ist und Markierungen (41) aufweist zur Erzeugung eines nacheinander wechselnden '1'/'0'- Bit-Musters und die 360° des Kreisumfanges dividiert durch die Anzahl der Markierungen (41) auf dem Kreisumfang einen Taktwinkel (ß) definiert, **dadurch gekennzeichnet, dass** die Markierungen (41), abgesehen von einigen vordefinierten Stellen, in genau äquidistanten Winkelabständen von '1' auf '0' wechseln und dass jeweilige ausgewählte Markierungen (41) mit einem Versatz in Bezug zur festen Einteilung des Taktwinkels (ß) auf die Trägerplatte (8) aufgebracht sind, wodurch das '1'/'0'-Bit-Muster in Bezug zum Taktwinkel (ß) verzögert wechselt und dass der nächst folgende Wechsel der Markierung nicht versetzt in Bezug zur festen Einteilung des Taktwinkels (ß) angeordnet ist, wodurch ein bestimmtes Muster gebildet ist, wobei einer einzelnen Codespur (4) nur ein einzelner Sensor (1) zugeordnet ist.

2. Vorrichtung nach Anspruch 1, **dadurch gekennzeichnet, dass** die Anordnung den Zustandswechsel beim Übergang von der einen zur anderen Markierung (41) detektiert zur Bestimmung der Lage des Überganges innerhalb eines Taktwinkels (ß).

3. Vorrichtung nach Anspruch 1 oder 2, **dadurch gekennzeichnet, dass** die nicht mit einem Versatz (δ) angeordneten Markierungen (41) mit einer Teilung eines halben Taktes (ß/2) angeordnet sind.

4. Vorrichtung nach einem der Ansprüche 1 bis 3, **dadurch gekennzeichnet, dass** konzentrisch zur ersten Codespur (4) eine zweite, taktgebende Referenz-Codespur (5) und ein einzelner fest stehender, auf die Codespur (5) wirkender Sensor (2) vorgesehen ist wobei diese Codespur (5) mit derselben Anzahl Markierungen (51) wie sie auf der ersten Codespur (4) ausgebildet ist und diese über den Kreisumfang äquidistant angeordnet sind und jede Markierung den Taktwinkel (ß) bestimmt.

5. Vorrichtung nach Anspruch 4, **dadurch gekennzeichnet, dass** die beiden auf die Codespuren (4, 5) wirkenden Sensoren (1,2) um einen festen Winkel (32) versetzt, der vorzugsweise maximal die Hälfte des Taktwinkels (ß) beträgt, angeordnet sind.

6. Vorrichtung nach einem der Ansprüche 1 bis 5, **dadurch gekennzeichnet, dass** das durch die phasenverschobene Anordnung von Markierungen (41) auf der Codespur (4) bestimmte Bitmuster sich während der Drehung der Trägerplatte (8) innerhalb eines fest vorgegebenen Winkelbereichs (C), der die vollen 360° oder nur einen Teil davon umfasst, jedesmal nach Durchlaufen eines weiteren Taktes (ß) ändert.

7. Vorrichtung nach Anspruch 6, **dadurch gekennzeichnet, dass** die durch das Bitmuster erzeugten Signalcodebits (7) mit einer fest vorgegebenen Wortlänge von beispielsweise 3, 4 oder mehr Bit ein Datenwort ergeben, das sich eindeutig einer festen Anzahl von Takten (ß) innerhalb des fest vorgegebenen Winkelbereichs (C) und somit einem definierten Winkel (ϕ) zuordnen lässt.

8. Vorrichtung nach einem der vorhergehenden Ansprüche 1 bis 7, **dadurch gekennzeichnet, dass** das durch die phasenverschobene Anordnung von Markierungen auf der Codespur (5) bestimmte Bitmuster (7) nach jeder Taktposition (ß) verändert ist und dieses eindeutig und einmalig, singulär ist, womit die Position und eindeutig identifizierbar festgelegt ist.

9. Vorrichtung nach einem der vorhergehenden Ansprüche 1 bis 8, **dadurch gekennzeichnet, dass** die Codespur (4, 5) und der Sensor (1, 2) magnetische, optische, kapazitive oder induktive Mittel zur Festlegung und Erkennung der Markierungen (41, 51) aufweisen, wobei die magnetischen Mittel bevorzugt sind.

10. Vorrichtung nach einem der vorhergehenden Ansprüche 1 bis 9, **dadurch gekennzeichnet, dass** die Vorrichtung elektronische Mittel (28,281,282,283) aufweist zur Ansteuerung und Auswertung der Drehwinkelsensoranordnung (26), wie vorzugsweise eine Mikroprozessorsteuerung.

11. Vorrichtung nach Anspruch 10, **dadurch gekennzeichnet, dass** die singulären Muster der Signalcodebits (7) in einem elektronischen Speicher abgelegt sind als Referenz mit der zugeordneten Winkellage der Trägerplatte (8)

12. Vorrichtung nach Anspruch 11, **dadurch gekennzeichnet, dass** elektronische Mittel zur Drehwinkelposition abhängigen Ansteuerung und Regelung eines elektrisch kommmutierten Motors (25) der Servolenkung (29) vorgesehen sind.

13. Vorrichtung nach Anspruch 12, **dadurch gekennzeichnet, dass** die Lenkvorrichtung (29) ein Getriebe (27) enthält, welches einen Kugelgewindetrieb (27) aufweist und dieser mit dem elektrisch kommmutierten Motor (25) wirkverbunden ist.

14. Verfahren zur Bestimmung eines Winkels in einer elektrische Servolenkvorrichtung (29) für Kraftfahrzeuge mittels einer Drehwinkelsensoranordnung (26) zur Erfassung der Position der Lenkbewegung, wobei diese eine relativ oder entsprechend zur Lenkbewegung mit drehende Trägerplatte (8) mit mindestens einer Codespur (4) und einen fest stehenden, auf die Codespur (4) wirkenden, Sensor (1) enthält, wobei die Codespur (4) kreisförmig um die Drehachse (Z) der Trägerplatte (8) angeordnet ist und Markierungen (41) aufweist zur Erzeugung eines nacheinander wechselnden '1'/'0'- Bit-Musters und die 360° des Kreisumfanges dividiert durch die Anzahl der Markierungen (41) auf dem Kreisumfang einen Taktwinkel ß definiert, **dadurch gekennzeichnet, dass** die Markierungen (41), abgesehen von einigen vordefinierten Stellen, in genau äquidistanten Winkelabständen von '1' auf '0' wechseln und dass jeweilige ausgewählte Markierungen (41) mit einem Versatz in Bezug zur festen Einteilung des Taktwinkels (ß) auf die Trägerplatte (8) aufgebracht werden, wodurch das '1'/'0'- Bit-Musters in Bezug zum Taktwinkel (ß) verzögert wechselt und dass der nächst folgende Wechsel der Markierung nicht versetzt in Bezug zur festen Einteilung des Taktwinkels (ß) angeordnet wird, wodurch ein bestimmtes Muster gebildet wird, wobei einer einzelnen Codespur (4) nur ein einzelner Sensor (1) zugeordnet wird:
o durch Erfassung der Position, die mit einem Sensor (1) ausgelesen wird,
o nach Drehung der Trägerplatte um einen oder mehreren Taktwinkel (ß) in einer beliebigen Drehrichtung durch Vergleich mit dem festen Taktwinkel (ß) für jeden Takt ein Signalcodebit (7) bestimmt wird,
o die Folge von Signalcodebits (7) in einen ersten Speicher mit einer fest vorgegebenen, aber frei wählbaren Wortlänge von zwei oder mehreren Bit Wortlänge, eingespeichert wird,
o die eingespeicherten Signalcodebits (7) anhand einer fest vorgegebenen Regel mit der eine Zuordnung zwischen Drehwinkel und Position bestimmt ist, ausgewertet wird
und daraus der Drehwinkel bestimmt wird.

15. Verfahren nach Anspruch 14, **dadurch gekennzeichnet, dass** die fest vorgegebene Regel durch eine in einem zweiten Speicher hinterlegten Tabelle ausgebildet ist, in der eine Zuordnung zwischen Drehwinkeln und korrespondierend mit der Wortlänge im ersten Speicher aus zwei oder mehreren Bit bestehenden Wörtern abgelegt ist welche verglichen werden und daraus der Drehwinkel bestimmt wird.

## Claims

1. Electric power assisted steering device (29) for motor vehicles having an angle of rotation sensor arrangement (26) for detecting the position of the steering movement, wherein it contains a supporting plate (8) rotating relative or corresponding to the steering movement and having at least one code track (4) and a fixed sensor (1) acting on the code track (4), wherein the code track (4) is arranged in a circle around the rotational axis (Z) of the supporting plate (8) and has markings (41) for producing a successively changing '1'/'0' bit pattern and the 360° of the circumference divided by the number of the markings (41) on the circumference defines a clock-pulse angle (ß), **characterised in that** the markings (41), apart from some predefined positions, change from '1' to '0' at precisely equidistant angular distances, and **in that** respective selected markings (41) are applied to the supporting plate (8) with an offset in relation to the fixed division of the clock-pulse angle (ß), whereby the '1'/'0' bit pattern changes with a delay in relation to the clock-pulse angle (ß), and **in that** the next change of the marking is not arranged offset in relation to the fixed division of the clock-pulse angle (ß), whereby a specific pattern is formed, in which only one single sensor (1) is assigned to one single code track (4).

2. Device according to Claim 1, **characterised in that** the arrangement detects the change of state during the transition from the one to the other marking (41), in order to determine the position of the transition within a clock-pulse angle (ß).

3. Device according to Claim 1 or 2, **characterised in that** the markings (41) which are not arranged with an offset (δ) are arranged with a division of a half of a clock-pulse (ß/2).

4. Device according to any one of Claims 1 to 3, **characterised in that** concentrically to the first code track (4) a second clocking reference code track (5) and a single fixed sensor (2) acting on the code track (5) are provided, wherein this code track (5) is formed with the same number of markings (51) as on the first code track (4) and these are arranged equidistantly over the circumference and each marking determines the clock-pulse angle (ß).

5. Device according to Claim 4, **characterised in that** the two sensors (1, 2) acting on the code tracks (4, 5) are arranged offset by a fixed angle (32) which preferably is at most half of the clock-pulse angle (ß).

6. Device according to any one of Claims 1 to 5, **characterised in that** the bit pattern, which is determined by the phase-shifted arrangement of markings (41) on the code track (4), during the rotation of the supporting plate (8) within a predefined angular range (C), which encompasses the full 360° or only a part of it, changes each time after passing through a further clock-pulse angle (β).

7. Device according to Claim 6, **characterised in that** the signal code bits (7), produced by the bit pattern and having a predefined word length of, for example, 3, 4 or more bits, result in a data word which can be unequivocally assigned to a fixed number of clock-pulses (ß) within the predefined angular range (C) and consequently can be assigned to a defined angle (ϕ).

8. Device according to any one of Claims 1 to 7, **characterised in that** the bit pattern (7) determined by the phase-shifted arrangement of markings on the code track (5) is changed after each clock-pulse position (β) and is unambiguously and uniquely singular, whereby the position is defined in an unambiguously identifiable manner.

9. Device according to any one of Claims 1 to 8, **characterised in that** the code track (4, 5) and the sensor (1, 2) have magnetic, optical, capacitive or inductive means for determining and detecting the markings (41, 51), wherein the magnetic means are preferred.

10. Device according to any one of Claims 1 to 9, **characterised in that** the device has electronic means (28, 281, 282, 283) for controlling and evaluating the angle of rotation sensor arrangement (26), such as preferably microprocessor control.

11. Device according to Claim 10, **characterised in that** the singular patterns of the signal code bits (7) are stored in an electronic memory as a reference with the associated angular position of the supporting plate (8).

12. Device according to Claim 11, **characterised in that** electronic means are provided for controlling and regulating, as a function of the position of the angle of rotation, an electrically commutated motor (25) of the power assisted steering (29).

13. Device according to Claim 12, **characterised in that** the steering device (29) contains a gearing mechanism (27) which has a ball screw (27) and this ball screw (27) is operationally connected to the electrically commutated motor (25).

14. Method for determining an angle in an electrical power assisted steering device (29) for motor vehicles by means of an angle of rotation sensor arrangement (26) for detecting the position of the steering movement, wherein it contains a supporting plate (8) rotating relative or corresponding to the steering movement and having at least one code track (4) and a fixed sensor acting on the code track (4), wherein the code track (4) is arranged in a circle around the rotational axis (Z) of the supporting plate (8) and has markings (41) for producing a successively changing '1'/'0' bit pattern and the 360° of the circumference divided by the number of the markings (41) on the circumference defines a clock-pulse angle (ß), **characterised in that** the markings (41), apart from some predefined positions, change from '1' to '0' at precisely equidistant angular distances, and **in that** respective selected markings (41) are applied to the supporting plate (8) with an offset in relation to the fixed division of the clock-pulse angle (ß), whereby the '1'/'0' bit pattern changes with a delay in relation to the clock-pulse angle (ß), and **in that** the next change of the marking is not arranged offset in relation to the fixed division of the clock-pulse angle (ß), whereby a specific pattern is formed, in which only one single sensor (1) is assigned to one single code track (4):
- by detecting the position which is read by a sensor (1),
- after rotation of the supporting plate about one or more clock-pulse angles (β) in any direction of rotation a signal code bit (7) is determined for each clock-pulse by comparison with the fixed clock-pulse angle (β),
- the sequence of signal code bits (7) is stored in a first memory with a predefined but freely selectable word length of two or more bits word length,
- the stored signal code bits (7) are evaluated by means of a predefined rule, by which an assignment between the angle of rotation and the position is determined and the angle of rotation is determined therefrom.

15. Method according to Claim 14, **characterised in that** the predefined rule is formed by a table stored in a second memory, in which an assignment between the angles of rotation and words corresponding with the word length in the first memory and consisting of two or more bits is stored which are compared and the angle of rotation is determined therefrom.

## Revendications

1. Dispositif électrique de direction assistée (29) pour des véhicules à moteur, qui comporte un ensemble capteur d'angle de rotation (26) destiné à détecter la position du mouvement de braquage, ledit ensemble comprenant une plaque de support (8) tournant relativement au mouvement de braquage ou en correspondance avec ce dernier et pourvue au moins d'une piste de codes (4) et d'un capteur (1) fixe agissant sur la piste de codes (4). Ladite piste de codes (4) est placée en forme de cercle autour de l'axe de rotation (Z) de la plaque de support (8) et possède des repères (41) pour la production d'un modèle de bits '1'/'0' alternant et divise les 360° de la périphérie du cercle par le nombre de repères (41) sur ladite périphérie du cercle, définissant ainsi un angle de cadence (ß), **caractérisé en ce que** les repères (41), hormis quelques endroits prédéfinis, changent dans des distances angulaires équidistantes de '1' à '0' et que les repères (41) sélectionnés sont appliqués avec un décalage par rapport à la subdivision fixe de l'angle de cadence (ß) sur la plaque de support (8), moyennant quoi le modèle de bits '1'/'0' change en retard par rapport à l'angle de cadence (ß) et que le prochain changement de repère (41) n'est pas agencé décalé par rapport à la subdivision fixe de l'angle de cadence (ß), moyennant quoi un seul capteur (1) est affecté à une seule piste de code (4).

2. Dispositif selon la revendication 1, **caractérisé en ce que** la disposition du changement d'état détecte, lors du passage d'un repère (41) à un autre, afin de déterminer la longueur du passage à l'intérieur d'un angle de cadence (ß).

3. Dispositif selon la revendication 1 ou 2, **caractérisé en ce que** les repères (41) agencés sans décalage (δ) sont agencés avec une subdivision d'une demi-cadence (ß/2).

4. Dispositif selon une des revendications de 1 à 3, **caractérisé en ce que** l'on prévoit une deuxième piste de codes de référence (5) établissant la cadence et étant concentrique par rapport à la première piste de codes (4), et au moins un seul capteur fixe (2) agissant sur la piste de codes (5), auquel cas cette piste de codes (5) est formée avec le même nombre de repères (51) comme pour la première piste de codes (4) et que ceux-ci sont agencés équidistants sur la circonférence et que chaque repère détermine l'angle de cadence (ß).

5. Dispositif selon la revendication 4, **caractérisé en ce que** les deux capteurs (1, 2) agissant sur la piste de codes (4, 5) sont agencés décalés d'un angle fixe (32) qui représente, de préférence, au maximum la moitié de la valeur de l'angle de cadence (ß).

6. Dispositif selon une des revendications de 1 à 5, **caractérisé en ce que** par la disposition en décalage de phase de repères (41) sur la piste de codes (4) un modèle de bits déterminé se modifie pendant la rotation de la plaque de support (8) à l'intérieur d'une plage angulaire prédéterminée de manière fixe (C) qui comprend la totalité des 360° ou seulement une partie de ceux-ci, à chaque fois après le passage d'une autre cadence (ß).

7. Dispositif selon la revendication 6, **caractérisé en ce que** les bits de code de signaux (7) produits par le modèle de bits avec une longueur de mots prédéterminée de manière fixe de par exemple 3, 4 ou plusieurs bits génère un mot de données qui se laisse affecter explicitement un nombre fixe de cadences (ß) à l'intérieur de la plage angulaire prédéterminée de manière fixe (C), pour ainsi se laisser affecter un angle défini (ϕ).

8. Dispositif selon une des revendications de précédentes de 1 à 7, **caractérisé en ce que** par la disposition en décalage de phase de repères sur la piste de codes (5) un modèle de bits (7) est modifié après chaque position de cadence (ß) et que celui-ci est, explicitement et de manière identique, unique, auquel cas la position est explicitement déterminée de sorte à être identifiable.

9. Dispositif selon une des revendications de précédentes de 1 à 8, **caractérisé en ce que** la piste de codes (4, 5) et le capteur (1, 2) présentent des moyens magnétiques, optiques, capacitifs ou inductifs permettant de fixer et déterminer des repères (41, 51), les moyens magnétiques étant préférés.

10. Dispositif selon une des revendications précédentes de 1 à 9, **caractérisé en ce que** le dispositif présente des moyens électroniques (28, 281, 282, 283) permettant de commander et exploiter l'ensemble capteur d'angle de rotation (26), comme par exemple une commande à microprocesseur.

11. Dispositif selon la revendication 10, **caractérisé en ce que** les modèles uniques des bits de code de signaux (7) sont déposés dans une mémoire électronique en tant que référence avec la position angulaire associée de la plaque de support (8).

12. Dispositif selon la revendication 11, **caractérisé en ce que** l'on prévoit des moyens électroniques pour la commande et le réglage dépendant de la position d'angle de rotation d'un moteur à commutation électronique (25) de la direction assistée (29).

13. Dispositif selon la revendication 12, **caractérisé en ce que** le dispositif de direction assistée (29) comporte un engrenage (27), lequel présente un entrainement avec vis à billes (27) et que celui-ci est en liaison active avec le moteur à commutation électrique (25).

14. Procédé permettant de déterminer un angle dans un dispositif électrique de direction assistée (29) pour des véhicules à moteur à l'aide d'un ensemble capteur d'angle de rotation (26) permettant de saisir la position du mouvement de braquage, ledit ensemble comprenant une plaque de support (8) tournant relativement au mouvement de braquage ou en correspondance avec ce dernier et pourvue d'une piste de codes (4) et d'un capteur (1) fixe agissant sur la piste de codes (4), où ladite piste de codes (4) est placée en forme de cercle autour de l'axe de rotation (Z) de la plaque de support (8) et possède des repères (41) pour la production d'un modèle de bits alternant '1'/'0 et divise les 360° de la périphérie du cercle par le nombre de repères (41) sur ladite périphérie du cercle, définissant ainsi un angle de cadence ß, **caractérisé en ce que** les repères (41), hormis quelques endroits prédéfinis, changent dans des distances angulaires équidistantes de '1' à '0' et que les repères (41) sélectionnées sont appliqués avec un décalage par rapport à la subdivision fixe de l'angle de cadence (ß) sur la plaque de support (8), moyennant quoi le modèle de bits '1'/'0' change en retard par rapport à l'angle de cadence (ß) et que le prochain changement du repère (41) n'est pas agencé décalé par rapport à la subdivision fixe de l'angle de cadence (ß), auquel cas un seul capteur (1) est affecté à une seule piste de code (4) :
- par la saisie de la position qui est lue par le capteur (1),
- après la rotation de la plaque de support d'un ou plusieurs angles de cadence (ß) dans une direction de rotation au choix par une comparaison avec l'angle de cadence fixe (ß), un bit de code de signaux (7) est déterminé pour chaque cadence,
- la séquence de bits de code de signaux (7) est déposée dans une première mémoire avec une longueur de mots prédéfinie de manière fixe, mais arbitraire d'une longueur de mots deux ou plusieurs bits,
- les bits de code de signaux mémorisés (7) sont évalués à l'aide d'une règle prédéfinie de manière fixe avec laquelle une affectation entre angle de rotation et position est déterminée, et qu'ainsi l'angle de rotation est déterminé.

15. Procédé selon la revendication 14, **caractérisé en ce que** la règle prédéterminée de manière fixe est formée par un tableau déposé dans une deuxième mémoire, dans lequel est déposée l'affectation entre l'angle de rotation et les mots se composant de deux ou plusieurs bits et correspondant à la longueur de mots dans la première mémoire, mots qui seront comparés pour ainsi déterminer l'angle de rotation.
